# EUROPEAN PATENT APPLICATION

(11) **EP 4 844 639 A1**
(43) Date of publication of application: **25.11.2026**
(21) Application number: 24923443.6
(22) Date of filing: 11.11.2024
(51) Int. Cl.: G06N 5/02

(54) **INTENT EXPRESSION METHOD, APPARATUS AND SYSTEM**

(30) Priority: 08.02.2024 CN 202410179239
(71) Applicant: Huawei Technologies Co., Ltd., Shenzhen, Guangdong 518129 (CN)
(72) Inventor: LI, Yexing, Shenzhen, Guangdong 518129 (CN); LI, Dong, Shenzhen, Guangdong 518129 (CN); YU, Yijun, Shenzhen, Guangdong 518129 (CN)
(74) Representative: Huawei European IPR
(86) International application number: PCT/CN2024/131312
(87) International publication number: WO 2025/167239

(57) **Abstract**

An intent expression method, an apparatus, and a system are provided. A first network element receives an intent, where the intent expresses an expectation for a network by using a first expression of a first type. The first network element may convert the first expression into a second expression of a second type. The second expression includes an attribute set used to determine at least one action. The expectation for the network is fulfilled by executing the at least one action. This lowers an intent expression requirement and supports a flexible intent expression.

## Description

This application claims priority to Chinese Patent Application No. 202410179239.3, filed with the China National Intellectual Property Administration on February 8, 2024 and entitled "INTENT EXPRESSION METHOD, APPARATUS, AND SYSTEM", which is incorporated herein by reference in its entirety.

### TECHNICAL FIELD

This application relates to the field of communication technologies, and more specifically, to an intent expression method, an apparatus, and a system.

### BACKGROUND

With development of network management, a network consumer entity may not directly manage a network. The network consumer entity may send, to a network producer entity, an intent expressed by using an expression of a specific structure, and the network producer entity executes the intent, to meet an expectation of the network consumer entity for the network.

However, the network producer entity cannot recognize an intent that is not expressed by using the expression of the specific structure, causing the expression of the specific structure to impose a high expression requirement on the network consumer entity. Therefore, an intent expression method is urgently needed, to lower an intent expression requirement.

### SUMMARY

This application provides an intent expression method, an apparatus, and a system, to lower an intent expression requirement.

According to a first aspect, an intent expression method is provided. The method may be performed by a first network element or a chip in the first network element. The method includes: receiving an intent, where the intent expresses an expectation for a network by using a first expression of a first type; and converting the first expression into a second expression of a second type corresponding to the intent, where the second expression includes an attribute set, the attribute set is used to determine at least one action, and the at least one action is used to fulfill the expectation.

Based on this technical solution, the first network element receives the intent expressed by using the first expression of the first type, and may convert the first expression into the second expression of the second type that can be used to determine the at least one action. The expectation for the network is fulfilled by executing the at least one action. This lowers an intent expression requirement and supports a flexible intent expression.

With reference to the first aspect, in some implementations of the first aspect, the first expression is different from the second expression.

With reference to the first aspect, in some implementations of the first aspect, the first expression includes information that is not expressed by using the attribute set.

Based on this technical solution, the first expression may not need to be expressed by using the attribute set, and the first network element may recognize the first expression that is not expressed by using the attribute set. This lowers an intent expression requirement and supports a flexible intent expression.

With reference to the first aspect, in some implementations of the first aspect, the first expression includes information expressed by using an unstructured language, and the second expression includes information expressed by using a structured language.

Based on this technical solution, the first expression may be expressed by using the information expressed by using the unstructured language, and an intent expressed by using the unstructured language may be an unstructured intent. An unstructured language-based expression manner supports a flexible expression manner, so that the intent is expressed more flexibly.

For example, the intent represents a characteristic of intent-driven management information between a network consumer entity and a network producer entity.

For example, the expectation includes a requirement, a target, and a constraint for the network, and may not include expressions of how to fulfill the requirement, the target, and the constraint.

For example, the intent expressed by using the second expression includes one or more of the following: an intent expectation, an expectation context, an expectation object, and an expectation target. The expectation context represents a constraint condition for fulfilling the requirement, the expectation object represents an object on which a management action is to be performed, and the expectation target represents a target value for fulfilling the requirement.

With reference to the first aspect, in some implementations of the first aspect, the intent is from a second network element. The method further includes: sending a part or all of the second expression to the second network element; and receiving response information from the first network element, where the response information is used to determine whether the second expression expresses the expectation.

Based on this technical solution, the first network element sends the part or all of the generated second expression to the second network element, so that the second network element determines whether the second expression expresses the expectation for the network. In this way, reliability of an intent expression can be improved.

With reference to the first aspect, in some implementations of the first aspect, the second expression does not express the expectation, and the response information indicates how to modify the second expression.

Based on this technical solution, if the second expression does not express the expectation, the second network element may further indicate, to the first network element, how to modify the second expression. For example, the response information may indicate a reason and a modification manner. In this case, the first network element can modify the second expression based on the response information, to improve reliability of intent expression conversion.

With reference to the first aspect, in some implementations of the first aspect, the response information includes a third expression of the first type used to express the expectation, and the third expression is different from the first expression.

Based on this technical solution, the response information may be expressed by using the third expression of the first type. For example, the response information may be expressed by using the unstructured language. This lowers an expression requirement for the second network element and supports a flexible expression of the second network element.

With reference to the first aspect, in some implementations of the first aspect, the sending the part or all of the second expression to the second network element includes: sending the following information in the second expression to the second network element: an intent expectation and an expectation context; an intent target and a target context; and/or an expectation object and an object context.

Based on this technical solution, the first network element may send related context type information and non-context type information to the second network element. If a structure of the non-context type information is similar to that of the context type information, the second expression has a risk that the non-context type information and the context type information are reversed. The first network element sends the part or all of the generated second expression to the second network element, so that the second network element determines whether the second expression is expressed correctly. In this way, reliability of intent expression conversion can be improved.

With reference to the first aspect, in some implementations of the first aspect, the converting the first expression into the second expression of the second type corresponding to the intent includes: converting, based on prompt information of the attribute set, the first expression into the expression of the second type corresponding to the intent, where the prompt information indicates a conversion rule between the first expression and the second expression.

Based on this technical solution, the prompt information indicates the conversion rule between the first expression and the second expression. In this case, even if the first expression includes the information expressed by using the unstructured language, the first network element may convert the first expression into the second expression based on the conversion rule, to lower an intent expression requirement.

With reference to the first aspect, in some implementations of the first aspect, the second expression includes an intent expectation, and the conversion rule includes a rule for converting the first expression into the intent expectation; the second expression includes an expectation context, and the conversion rule includes a rule for converting the first expression into the expectation context; the second expression includes an intent target, and the conversion rule includes a rule for converting the first expression into the intent target; the second expression includes a target context, and the conversion rule includes a rule for converting the first expression into the target context; the second expression includes an expectation object, and the conversion rule includes a rule for converting the first expression into the expectation object; and/or the second expression includes an object context, and the conversion rule includes a rule for converting the first expression into the object context.

Based on this technical solution, the prompt information may indicate the conversion rules of the foregoing various types of information, so that intent conversion is more reliable.

With reference to the first aspect, in some implementations of the first aspect, the method further includes: updating the prompt information of the attribute set based on the response information.

Based on this technical solution, the first network element may further update the prompt information based on the response information, to enhance accuracy of the prompt information and improve reliability of subsequent expression conversion.

With reference to the first aspect, in some implementations of the first aspect, the method further includes: obtaining the prompt information.

Based on this technical solution, the first network element may generate, store, or configure the prompt information, so that expression conversion can be performed based on the prompt information, to improve reliability of expression conversion.

With reference to the first aspect, in some implementations of the first aspect, the method further includes: determining at least one action based on the second expression; and sending, to a third network element, information indicating the at least one action, or executing the at least one action.

Based on this technical solution, the first network element may determine the at least one action based on the second expression, and deliver the information about the at least one action, or execute the at least one action, to fulfill the expectation for the network.

With reference to the first aspect, in some implementations of the first aspect, the method further includes: sending the second expression to a fourth network element, where the fourth network element is configured to determine the at least one action.

Based on this technical solution, the first network element may send the second expression to the fourth network element, and the fourth network element determines the at least one action. The fourth network element may send the information indicating the at least one action, or execute the at least one action, to fulfill the expectation for the network.

According to a second aspect, an intent expression method is provided. The method may be performed by a second network element or a chip in the second network element. The method includes: sending an intent to a first network element. The intent expresses an expectation for a network by using a first expression of a first type, the first expression is different from a second expression of a second type, the second expression includes an attribute set, the attribute set is used to determine at least one action, and the at least one action is used to fulfill the expectation.

For descriptions of beneficial effects of the second aspect and implementations of the second aspect, refer to the descriptions of the first aspect and the implementations of the first aspect. Details are not described herein again.

With reference to the second aspect, in some implementations of the second aspect, the first expression includes information that is not expressed by using the attribute set.

With reference to the second aspect, in some implementations of the second aspect, the first expression includes information expressed by using an unstructured language, and the second expression includes information expressed by using a structured language.

With reference to the second aspect, in some implementations of the second aspect, the method further includes: receiving a part or all of the second expression from the first network element; and sending response information to the first network element, where the response information is used to determine whether the second expression expresses the expectation.

With reference to the second aspect, in some implementations of the second aspect, the second expression does not express the expectation, and the response information indicates how to modify the second expression.

With reference to the second aspect, in some implementations of the second aspect, the response information includes a third expression of the first type used to express the expectation, and the third expression is different from the first expression.

With reference to the second aspect, in some implementations of the second aspect, the receiving the part or all of the second expression from the first network element includes: receiving the following information in the second expression from the first network element: an intent expectation and an expectation context; an intent target and a target context; and/or an expectation object and an object context.

According to a third aspect, an intent expression method is provided. The method includes: A second network element sends an intent to a first network element, and the first network element receives the intent from the second network element, where the intent expresses an expectation for a network by using a first expression of a first type. The first network element converts the first expression into a second expression of a second type corresponding to the intent, where the second expression includes an attribute set, the attribute set is used to determine at least one action, and the at least one action is used to fulfill the expectation.

For descriptions of implementations of the third aspect and beneficial effects of the third aspect and the implementations of the third aspect, refer to the descriptions of the first aspect and the implementations of the first aspect. Details are not described herein again.

According to a fourth aspect, a communication apparatus is provided. The apparatus includes a transceiver unit and a processing unit. The transceiver unit is configured to receive an intent, where the intent expresses an expectation for a network by using a first expression of a first type. The processing unit is configured to convert the first expression into a second expression of a second type corresponding to the intent, where the second expression includes an attribute set, the attribute set is used to determine at least one action, and the at least one action is used to fulfill the expectation.

For descriptions of implementations of the fourth aspect and beneficial effects of the fourth aspect and the implementations of the fourth aspect, refer to the descriptions of the first aspect and the implementations of the first aspect. Details are not described herein again.

According to a fifth aspect, a communication apparatus is provided. The apparatus includes a transceiver unit. The transceiver unit is configured to send an intent to a first network element. The intent expresses an expectation for a network by using a first expression of a first type, the first expression is different from a second expression of a second type, the second expression includes an attribute set, the attribute set is used to determine at least one action, and the at least one action is used to fulfill the expectation.

For descriptions of implementations of the fifth aspect and beneficial effects of the fifth aspect and the implementations of the fifth aspect, refer to the descriptions of the first aspect and the implementations of the first aspect. Details are not described herein again.

According to a sixth aspect, a communication apparatus is provided. The communication apparatus has a function of implementing any one of the first aspect or the possible implementations of the first aspect, any one of the second aspect or the possible implementations of the second aspect, or any one of the third aspect or the possible implementations of the third aspect. The function may be implemented by hardware, or may be implemented by hardware executing corresponding software. The hardware or the software includes one or more units corresponding to the function.

According to a seventh aspect, a communication apparatus is provided. The communication apparatus includes a processor and a memory. Optionally, the communication apparatus may further include a transceiver. The memory is configured to store a computer program. The processor is configured to: invoke and run the computer program stored in the memory, and control the transceiver to receive and send a signal, to cause the communication apparatus to perform the method according to any one of the first aspect or the possible implementations of the first aspect.

For example, the communication apparatus is a first network element.

According to an eighth aspect, a communication apparatus is provided. The communication apparatus includes a processor and a memory. Optionally, the communication apparatus may further include a transceiver. The memory is configured to store a computer program. The processor is configured to: invoke and run the computer program stored in the memory, and control the transceiver to receive and send a signal, to cause the communication apparatus to perform the method according to any one of the second aspect or the possible implementations of the second aspect.

For example, the communication apparatus is a second network element.

According to a ninth aspect, a communication apparatus is provided. The communication apparatus includes a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, to perform the method according to any one of the first aspect or the possible implementations of the first aspect. The communication apparatus may be a chip used in a first network element.

According to a tenth aspect, a communication apparatus is provided. The communication apparatus includes a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, to perform the method according to any one of the second aspect or the possible implementations of the second aspect. The communication apparatus may be a chip used in a second network element.

According to an eleventh aspect, a computer-readable storage medium is provided. The computer-readable storage medium stores computer instructions. When the computer instructions are run on a computer, the method according to any one of the first aspect or the possible implementations of the first aspect is performed.

According to a twelfth aspect, a computer-readable storage medium is provided. The computer-readable storage medium stores computer instructions. When the computer instructions are run on a computer, the method according to any one of the second aspect or the possible implementations of the second aspect is performed.

According to a thirteenth aspect, a computer program product is provided. The computer program product includes computer program code. When the computer program code is run on a computer, the method according to any one of the first aspect or the possible implementations of the first aspect is performed.

According to a fourteenth aspect, a computer program product is provided. The computer program product includes computer program code. When the computer program code is run on a computer, the method according to any one of the second aspect or the possible implementations of the second aspect is performed.

According to a fifteenth aspect, a wireless communication system is provided. The wireless communication system includes the communication apparatus according to the fourth aspect and/or the communication apparatus according to the fifth aspect.

According to a sixteenth aspect, a wireless communication system is provided. The wireless communication system includes the communication apparatus according to any one or more of the fourth aspect to the fifteenth aspect, or the communication apparatus according to any one of the possible implementations of any one of the aspects.

### BRIEF DESCRIPTION OF DRAWINGS

FIG. 1 is a diagram of a data structure of an intent;
FIG. 2 is a diagram of an architecture of a communication system to which an embodiment of this application is applicable;
FIG. 3 is a schematic flowchart of an intent expression method according to an embodiment of this application; and
FIG. 4 and FIG. 6 are diagrams of possible communication apparatuses according to embodiments of this application.

### DESCRIPTION OF EMBODIMENTS

The following describes technical solutions of this application with reference to the accompanying drawings.

The technical solutions of this application may be applied to various types of network functions virtualization (network functions virtualization, NFV) systems. In the systems, current service technical solutions, network construction schemes, and network operation and maintenance methods of an operator may be described as modes and policies by using a standard formal language, and the technical solutions and the construction schemes are implemented based on the modes and the policies. For example, the technical solutions of this application may be applied to one or more of the following systems: a wireless intent-driven network (wireless intent-driven network, wIDN) system, an experiential networked intelligence (experiential networked intelligence, ENI) system, an intent-driven management service (intent-driven management service, IDMS) system, or an open network automation platform (open network automation platform, ONAP) system.

For clarity, the following explains some terms in embodiments of this application.

### 1. Network management, network management service, network producer entity, and network consumer entity

### 1.1 Network management

The network management is to manage a network resource, including but not limited to monitoring, controlling, and recording performance and usage of the network resource, and delivering a management action group to the network resource (for example, a device in a network) based on a detected network status, to cause the network to run effectively. For example, the network management may be to monitor, test, configure, analyze, evaluate, and control the network resource. The network management may alternatively be that when a fault occurs in the network, the fault can be reported and processed in time, a network system can be coordinated and maintained to run efficiently, and so on. The network resource is an object on which network management is to be performed, and may also be referred to as a network object or a managed entity. For example, the network resource may be a base station device, a router, a switch, or a core network device. This is not particularly limited in embodiments of this application. For ease of description, the managed entity is used as an example for description in embodiments of this application, but may be replaced with another object on which network management is to be performed.

### 1.2 Network management service

The network management service is a service that provides a network management function. A producer entity of the service usually provides the network management function for a consumer entity of the service through a network interface (for example, a service-based interface (service-based interface)).

### 1.3 Network producer entity

An entity that provides a network management service is referred to as the network producer entity. For example, a capability or a function of the network producer entity may be deployed on a network element, and the network element is referred to as a network management service producer network element. The capability or the function of the network producer entity may also be deployed on another device. This is not limited in embodiments of this application. For ease of description, the network producer entity is used as an example for description in embodiments of this application, but may be replaced with another device on which the capability or the function of the network producer entity is deployed.

### 1.4 Network consumer entity

An entity that invokes network management is referred to as the network consumer entity. For example, a capability or a function of the network consumer entity may be deployed on a network element, and the network element is referred to as a network management service consumer network element. The capability or the function of the network consumer entity may also be deployed on another device. This is not limited in embodiments of this application. For ease of description, the network consumer entity is used as an example for description in embodiments of this application, but may be replaced with another device on which the capability or the function of the network consumer entity is deployed.

### 2. Intent

The intent may also be referred to as a network management intent. The network management intent is a requirement of a network consumer entity for a network management service, and may also be referred to as a network management service requirement. The name is not limited in embodiments of this application. For example, the network management intent may be an intent like an optical dedicated line service intent or an energy-saving intent, for example, an intent (intent) defined in the 3rd generation partnership project (3rd generation partnership project, 3GPP) standard specification 28.312.

In an intent-based interaction scenario in this application, two roles are mainly included: a network management provider entity and a network consumer entity. The network management provider entity may also be referred to as a network management provider, an intent provider (intent provider), an intent handler (intent handler), or the like. The network consumer entity may also be referred to as a network management service consumer, an intent consumer (intent consumer), an intent owner (intent owner), or the like.

The network consumer entity may be an invoker of the network management service, may perform operations such as creating, modifying, deleting, and querying a network management intent expression, may be configured in a network management system (network management system, NMS), an element management system (element management system, EMS), or network equipment (network equipment, NE), and may be a management function, a management function entity, a management entity, a network device, a network element, or the like. This is not limited in this application.

The intent may be applied to a network system, to fulfill an expectation target of a specified performance indicator of a network device in a specific range. The intent may express an expectation for the network system by using a formal specification and description information. The formal specification may be intent-specific syntax or semantics, and the description information may be used to describe a requirement, a target, and a constraint of the intent.

The intent may include at least one intent expectation. Each intent expectation may represent a performance requirement of the network consumer entity for a specific network object. One intent expectation may include at least one expectation target and an expectation object. Each expectation target may represent a performance requirement of the network consumer entity for a specific attribute of the expectation object. For example, the intent expectation may include two expectation targets. One expectation target is that an average downlink throughput rate is greater than 5 Mbps, and the other expectation target is that end-to-end latency is less than 10 milliseconds. If the average downlink throughput rate of the expectation object is greater than 5 Mbps, the expectation target for the downlink throughput rate is met. If the end-to-end latency of the expectation object is less than 10 milliseconds, the expectation target for the latency is met. If both the two expectation targets of the intent expectation are met, the intent expectation is fulfilled. If one or more intent expectations are not met, or one or more expectation targets are not met, the intent is not met. This is also described as that the intent is not fulfilled (fulfilled) or the intent is not implemented.

The intent may further include an intent context. The intent context may represent a constraint or a condition of the network consumer entity for the intent. For example, the network consumer entity may constrain application duration of the intent by using the intent context.

The intent may further include an expectation context. The expectation context may represent a constraint or a condition of the network consumer entity for an intent expectation. For example, the network consumer entity may constrain application duration of the intent expectation by using the expectation context.

The intent may further include a target context. The target context may represent a constraint or a condition of the network consumer entity for an expectation target. For example, the network consumer entity may constrain application duration of the expectation target by using the target context.

The intent may further include an object context. The object context may represent a constraint or a condition of the network consumer entity for a network object to which the intent is applied. For example, the network consumer entity may indicate, by using the object context, an area of the network object to which the intent is applied.

The intent expectation, the expectation target, and the intent context described above may be used as information elements in an information object class (information object class, IOC) in an intent creation request. The network consumer entity may express the requirement for the network management service by sending the information elements to a network producer entity.

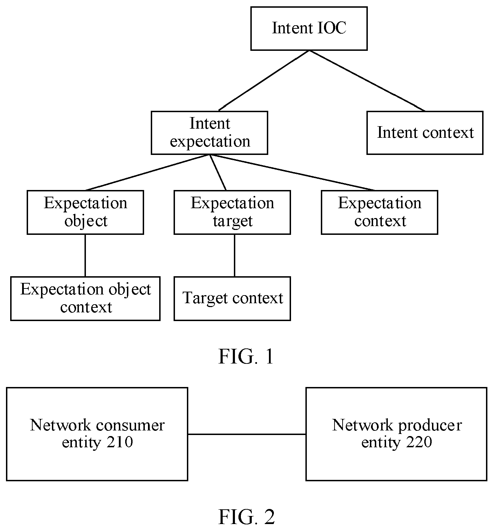

An information element in an intent IOC may express the requirement for the network management service by using a specific structure. For example, FIG. 1 is a diagram of a structure of an intent IOC.

Refer to FIG. 1. The intent IOC includes an intent expectation and an intent context. The intent expectation includes an expectation object, an expectation target, and an expectation context. The expectation object includes an expectation object context (which may also be referred to as an object context), and the expectation target includes a target context. It may be understood that a non-context type information element (for example, the intent IOC, the intent expectation, the expectation object, or the expectation target) may include a context type information element (for example, the intent context, the expectation object context, the target context, or the expectation context), and the context type information element can be used to constrain the non-context type information element.

It may be understood that FIG. 1 schematically describes a relationship between attributes in the intent IOC. Based on a requirement for a network management service, the intent IOC may further include another attribute. This is not particularly limited in this application. It may be further understood that a quantity of attributes of a same type is not particularly limited in this application. For example, one intent IOC may include one or more parallel intent expectation attributes, and one intent expectation may also include one or more parallel expectation target attributes.

### 3. Network management intent template

The network management intent template is templated description information of a network management intent, and may also be referred to as a network management service requirement template. The name is not limited in embodiments of this application. The intent template may be used to specify syntax and semantics of various types of attribute expressions described above. For example, the intent template may specify a field type and a value type that may be used by each attribute in an IOC. For example, the intent template may include intent expectation description information that is used to specify how an intent expectation is expressed. The intent expectation description information may specify a type of an expectation target attribute that may be included in the intent expectation, for example, latency, bandwidth, or a maximum quantity of users. The intent expectation description information may further specify a field type of each expectation target. For example, a field type of an expectation target for the latency is a character string, a field type of an expectation target for the bandwidth is a character string, and a field type of an expectation target for the maximum quantity of users is an integer. For another example, the intent template may further include intent context description information that specifies how an intent context and an expectation context are expressed. The intent context description information may be used to specify a field type and the like of the intent context. This is not particularly limited in this application.

### 4. Intent expression

In embodiments of this application, the intent expression is an information expression for expressing a network management service intent, and may be an instantiation result of a network management intent template. A consumer of a network management intent may instantiate an intent IOC based on the intent template to generate the intent expression. The intent expression generated through the instantiation can be used for a specific network service. For example, the intent expression may be represented by an attribute-value pair (for example, [attribute, value]) list of the network management service intent.

For example, the intent expression includes a performance indicator information instance, a network object information instance, and a context information instance.

For example, the performance indicator information instance may include a value or a value range of a target indicator requirement corresponding to performance indicator information. For example, a target indicator requirement corresponding to a performance indicator information template includes a bandwidth parameter, and the performance indicator information instance includes that a value of the bandwidth parameter is 20 M, or a value range of the bandwidth parameter is 10 M to 15 M. For example, the target indicator requirement corresponding to the performance indicator information template includes a latency parameter, and a latency parameter instance includes that a value of the latency parameter is 2s, or a value range of the latency parameter is 1s to 5s.

A target network object indicated by the network object information instance is an instantiation result of a target network object indicated by a network object information template. For example, the target network object indicated by the network object information instance is one of target network objects indicated by the network object information template, in other words, indicates either a physical entity or a logical entity that implements a network management service. In this case, the network object information instance indicates a specific network object. For example, the network object information template indicates a network service, and the network object information instance indicates an energy-saving service.

The context information instance indicates a constraint condition of a network management intent expression. For example, the context information instance includes a constraint parameter of the network management intent expression. For example, the context information instance may include information about a source and a sink that correspond to the target network object indicated by the network object information instance.

An intent expectation information instance includes the performance indicator information instance and the network object information instance.

In embodiments of this application, an "intent" on which transmission is performed by using a message is the intent expression.

### 5. Intent instance

The network management intent instance is a network management intent processing process locally created by a network management service provider entity based on a received network management intent expression (for example, a performance indicator information instance, a network object information instance, or a context information instance).

The network management intent processing process is used to process the network management intent expression. For example, the network management intent processing process may include an identifier, where the identifier identifies the process. The network management intent processing process may include a compute resource, where the compute resource is used to perform operations such as network management intent translation and database (for example, semantic knowledge base) querying; and may include a storage resource, where the storage resource is used to store the network management intent expression, a network management intent translation result, and the like.

The network management intent translation is performed to convert the network management intent expression into a corresponding management action group. The management action group may be instructions applied to a physical entity or a logical entity, for example, adjusting an antenna tilt angle of a base station or turning on an energy-saving switch of a cell.

### 6. Network management action group (actions)

The network management action group is one or more network management actions generated by a network producer entity based on an intent expression. The network management action may also be referred to as an action. The network producer entity executes the one or more network management actions to meet an intent of a network consumer entity. The network management action group may also be referred to as a management operation, an intent operation, or a network management task. The network management action group may be an operation instruction set for an expectation object (for example, a physical entity or a logical entity to which the intent is applied and that is in a network system), and includes one or more instructions, for example, adjusting an antenna tilt angle of a base station or turning on an energy-saving switch of a cell.

The network producer entity may generate a plurality of management action groups based on the intent expression. In an execution process, the network producer entity may select a part of the plurality of management action groups for execution at a single time. In other words, the management action group generated by the network producer entity based on intent expression translation is an optional operation that can be used to meet the intent. The network producer entity may select one of the network management action groups for execution to meet the intent, or may select a network management action group for execution a plurality of times to meet the intent.

The foregoing describes related terms in embodiments of this application. The following describes, with reference to FIG. 1, an application scenario to which embodiments of this application are applicable.

FIG. 2 is a diagram of a structure of a communication system to which an embodiment of this application is applicable. Apparatuses that may be used in the communication system are first described.
1. A network consumer entity 210 may be configured to: invoke a management service, or invoke an intent service to manage a network system. For example, the network consumer entity 210 may instantiate an intent template, set an intent IOC, to generate an intent expression, and send the intent expression to a network producer entity 220 to implement an expectation for the network system.
   The network consumer entity 210 may also be referred to as a network management service consumer network element, a network management service consumer, an intent management service consumer (intent management service consumer), an intent consumer (intent consumer), an intent owner (intent owner), or the like. In a future communication system, the network consumer entity may also have another name. This is not particularly limited in this application.
2. The network producer entity 220 may be configured to provide a management service. For example, the network producer entity 220 may receive the intent expression from the network consumer entity 210, and perform, based on the intent expression, procedures of intent translation, intent management, and intent execution and maintenance.

The network producer entity 220 may also be referred to as a network management service producer network element, an intent management service provider (intent management service provider), a network management service producer, an intent provider (intent provider), an intent handler (intent handler), or the like. In the future communication system, the network producer entity may also have another name. This is not particularly limited in this application.

The foregoing entities may be network elements in a hardware device, may be software functions run on dedicated hardware, or may be virtualization functions instantiated on a platform (for example, a cloud platform). It may be understood that the foregoing entities may be implemented by one device, or may be implemented by a plurality of devices together. In addition, the foregoing entities may alternatively be functional modules in a system, for example, functional modules in a network management system (network management system, NMS), an equipment management system (equipment management system, EMS), or a device, for example, one or more functional modules in network equipment (network equipment, NE). A network device may be a base station or a core network element.

For example, the network consumer entity 210 may be deployed in the NMS, and the network producer entity 220 may be deployed in different EMSs. The network consumer entity 210 and the network producer entity 220 may exchange information through an interface between the NMS and the EMS.

For another example, the network consumer entity 210 may be deployed in the EMS, and the network producer entity 220 may be deployed in different NEs. The network consumer entity 210 and the network producer entity 220 may exchange information through an interface between the NMS and the EMS.

The solutions of this application may be further applied to another system including a corresponding entity. This is not specifically limited in this embodiment of this application.

It can be learned that, the network consumer entity may send the intent of the expression of the specific structure shown in FIG. 1 to the network producer entity, so that the network producer entity executes the intent, to meet an expectation of the network consumer entity for a network. However, the expression of the specific structure shown in FIG. 1 imposes a high expression requirement on the network consumer entity. Therefore, this application provides an intent expression method, to lower an expression requirement for the network consumer entity.

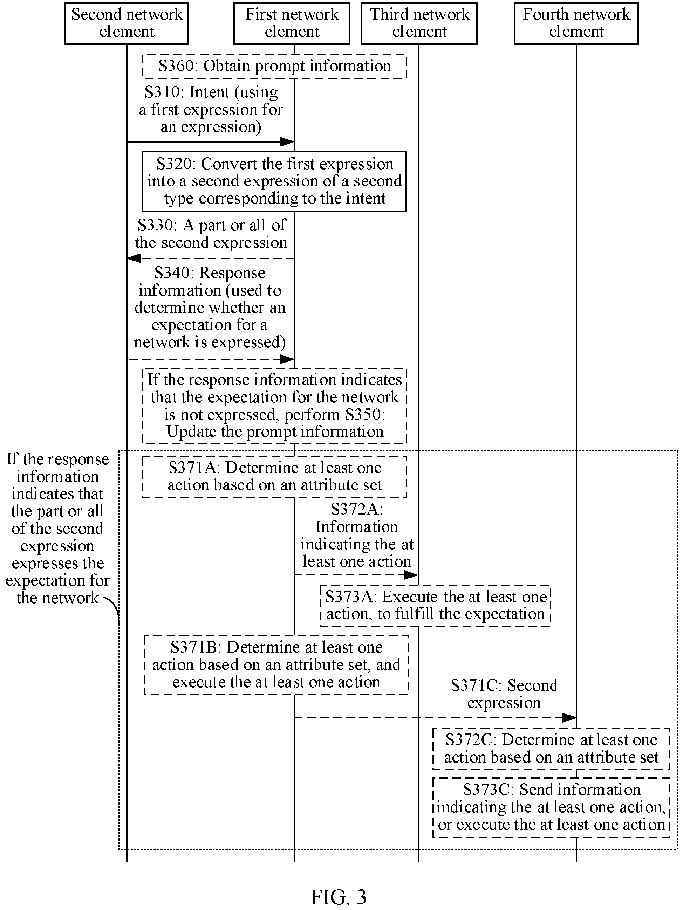

FIG. 3 is a schematic flowchart of an intent expression method according to an embodiment of this application.

S310: A second network element sends an intent to a first network element. Correspondingly, the first network element receives the intent from the second network element.

The intent expresses an expectation for a network by using a first expression of a first type. For the expectation for the network, refer to the foregoing descriptions of the network. Details are not described herein again.

S320: The first network element converts the first expression into a second expression of a second type corresponding to the intent.

The second expression includes an attribute set, the attribute set is used to determine at least one action, and the at least one action is used to fulfill the expectation.

The first network element receives the first expression, and may convert the first expression into the second expression of the second type. The second expression includes the attribute set, the attribute set is used to determine the at least one action, and the at least one action is used to fulfill the expectation. The first network element converts the first expression into the second expression that can be used to determine the action, to lower an expression requirement for the second network element and support a flexible expression.

In this embodiment of this application, the first network element may be the network producer entity shown in FIG. 2, or the first network element may be another network element having a conversion function. The second network element may be the network consumer entity shown in FIG. 2 or another network element that expresses the expectation for the network. This is not particularly limited in this application.

The first type is different from the second type. The first expression of the first type is different from the second expression of the second type.

In some implementations, the first expression includes information that is not expressed by using the attribute set, and the second expression includes information expressed by using the attribute set. The attribute set may be understood as the intent IOC shown in FIG. 1. In other words, the first expression may be the expression that does not use the structure shown in FIG. 1, and the second expression may be the expression shown in FIG. 1.

In some implementations, the first expression includes information expressed by using an unstructured language, and the second expression includes information expressed by using a structured language. The information expressed by using the structured language may be information arranged and generated based on a specific structure, for example, the structure shown in FIG. 1. The information expressed by using the unstructured language may be information that can be flexibly arranged and expressed.

For example, the first expression of the first type may be various pieces of natural language information, machine language information, and image information provided by a user, and is used to express the expectation for the network. For example, the first expression of the first type may be any information provided by the user on an interface. For example, the first expression of the first type may be a natural statement provided by the user, for example, "save electric energy today". The second network element may not process (or simply process) the natural statement and may send the natural statement to the first network element. The first network element can convert the natural statement into the second expression that can be executed, to greatly reduce processing complexity at a user end.

It should be noted that the first expression may be a natural word, a natural statement, a computer statement, a picture, a video, or any combination above. This is not particularly limited in this application. For example, the first expression may alternatively include the information expressed by using the structured language. However, the first network element does not expect the second network element to provide an intent expressed by using the structured language, and the first network element still processes and analyzes the expression to obtain an intent that is expressed by using the structured language and that can be executed.

It should be further noted that the intent expressed by using the structured language may be referred to as a structured intent, and an intent expressed by using the unstructured language may be referred to as an unstructured intent. In some implementations, the intent in this embodiment of this application may include the structured intent and the unstructured intent. In other words, information that supports a natural language-based expression may be added to the intent provided in this embodiment of this application on the basis of FIG. 1, so that the second network element can choose to express the expectation for the network by using the information, to lower an expression requirement for the second network element and support a flexible expression.

The foregoing describes a difference between the first expression of the first type and the second expression of the second type. The following describes how the first network element converts the first expression into the second expression.

In some implementations, that the first network element converts the first expression into the second expression may include: The first network element converts the first expression into the second expression based on prompt information of the attribute set, where the prompt information indicates a conversion rule between the first expression and the second expression. For example, the prompt information may be used to concatenate an original text with the prompt information based on a context (for example, a network context), a chain of thought, or a prompt, to generate a task at a finer granularity. For example, a base station and a core network device belong to a type A (for example, an expectation object type), and a throughput rate and latency belong to a type B (a target type). The user inputs bandwidth, and a bandwidth statement does not belong to the existing type A or type B. A prompt function may be used to separately perform common analysis on information of the type A and information of the type B. For example, the type A indicates an object that can be managed, and the type B indicates a requirement that can be met. The prompt function further analyzes the "bandwidth" provided by the user, and determines that the word meets a function that the type B indicates the requirement that can be met, to determine that the "bandwidth" belongs to the type B.

For example, the second expression includes an intent expectation, and the conversion rule includes a rule for converting the first expression into the intent expectation; the second expression includes an expectation context, and the conversion rule includes a rule for converting the first expression into the expectation context; the second expression includes an intent target, and the conversion rule includes a rule for converting the first expression into the intent target; the second expression includes a target context, and the conversion rule includes a rule for converting the first expression into the target context; the second expression includes an expectation object, and the conversion rule includes a rule for converting the first expression into the expectation object; and/or the second expression includes an object context, and the conversion rule includes a rule for converting the first expression into the object context.

It may be understood that the conversion rule may be indicated by one or more pieces of information. For example, the prompt information may uniformly indicate rules for converting the first expression into the intent context, the intent expectation, the expectation context, the intent target, the target context, the expectation object, and/or the object context, or the prompt information may separately indicate rules for converting the first expression into the intent context, the intent expectation, the expectation context, the intent target, the target context, the expectation object, and/or the object context. This is not particularly limited in this application.

For ease of understanding of subsequent examples, an example of a first expression #1 is provided herein for reference in the subsequent examples: "It is assured that for a base station in a first area at night, load is less than 20% and more than 80% of energy is saved; and load is greater than 60% and a handover failure rate is less than 2%".

For example, the rule for converting the first expression into the intent expectation indicates to convert, into the intent expectation, information that expresses the expectation (a target to be fulfilled) for the network and that is in the first expression. For example, the first network element converts the first expression #1 into the intent expectation that "for the base station in the first area, the load is less than 20% and more than 80% of energy is saved; and the load is greater than 60% and the handover failure rate is less than 2%".

For example, the rule for converting the first expression into the intent context indicates to convert, into the intent context, information that is about constraint conditions in a process of fulfilling all expectations and that is in the first expression. For example, the first network element converts the first expression #1 into the intent context of "at night".

For example, the rule for converting the first expression into the intent target indicates to convert, into the intent target, information (for example, bandwidth, latency, energy consumption, or energy efficiency) that describes a network performance indicator and that is in the first expression. For example, the first network element converts the first expression #1 into an intent target #1 that "more than 80% of energy is saved" and an intent target #2 that "the handover failure rate is less than 2%".

For example, the rule for converting the first expression into the target context indicates to convert, into the target context, information that describes a condition that constrains the intent target and that is in the first expression. For example, the first network element converts the first expression #1 into a target context #1, corresponding to the intent target #1, that "the load is less than 20%", and a target context #2, corresponding to the intent target #2, that "the load is greater than 60%".

For example, the rule for converting the first expression into the expectation object indicates to convert, into the expectation object, an application object or a network object (for example, a subnet, a base station, or a cell) described in the first expression. For example, the first network element converts the first expression #1 into the expectation object of the "base station".

For example, the rule for converting the first expression into the object context indicates to convert, into the object context, information that describes a condition that constrains the expectation object and that is in the first expression. For example, the first network element converts the first expression #1 into the object context of the "first area".

In some implementations, the prompt information may further indicate a format for converting the first expression into the second expression. For example, the prompt information may indicate that the intent context, the intent expectation, the expectation context, the intent target, the target context, the expectation object, and/or the object context are/is expressed in a Jason format.

For example, the prompt information may indicate that the intent context, the intent expectation, the expectation context, the intent target, the target context, the expectation object, and/or the object context are/is expressed in a triplet format. For ease of understanding of the example, Table 1 provides an example of the intent target, and Table 2 provides an example of context type information (for example, the intent context, the expectation context, the target context, or the object context). It may be understood that a format of the intent expectation and a format of the expectation object may be similar to a format of the intent target. Details are not repeated herein.

**Table 1:**

| Attribute name (attribute name) | Support qualifier (support qualifier) | Is readable (isReadable) | Is writable (isWritable) | Is invariant (isInvariant) | Is notifiable (isNotifiable) |
|---|---|---|---|---|---|
| Target name (target name) | M | T | T | F | T |
| Target condition (target condition) | M | T | T | F | F |
| Target value range (target value range) | M | T | T | F | F |

In Table 1, a symbol "M" represents whether the information is mandatory (mandatory), a symbol "T" represents whether the information is true, and a symbol "F" represents whether the information is false. The foregoing symbols have similar meanings in Table 2. Details are not described below again.

For example, the intent target is represented as a triplet [target name, target condition, target value range]. The intent target #1 that "more than 80% of energy is saved" may be represented as [energy efficiency, more than, 80%], and the intent target #2 that "the handover failure rate is less than 2%" may be represented as [handover failure rate, less than, 2%].

**Table 2:**

| Attribute name (attribute name) | Support qualifier (support qualifier) | Is readable (isReadable) | Is writable (isWritable) | Is invariant (isInvariant) | Is notifiable (isNotifiable) |
|---|---|---|---|---|---|
| Context attribute (context attribute) | M | T | T | F | F |
| Context condition (context condition) | M | T | T | F | F |
| Context value range (context value range) | M | T | T | F | F |

For example, the target context is represented as a triplet [context attribute, context condition, context value range]. For example, the target context #1 that "the load is less than is 20%" may be represented as [load, less than, 20%], and the target context #2 that "the load is greater than 60%" may be represented as [load, greater than, 60%].

In some implementations, the prompt information may further indicate a step for converting the first expression into the second expression. For example, the prompt information may further indicate the first network element to convert the first expression into the second expression through the following steps.

Step 1: Convert, into [intent expectation, intent context], information that is about the intent expectation and the intent context and that is in the first expression.

Step 2: Further convert the intent expectation into [intent target, expectation object, expectation context].

Step 3: Convert, into the target context of the intent target, information that is about the target context and that is in the first expression, to form [intent target, target context].

Step 4: Convert, into an object context of the expectation object, information that is about the object context and that is in the first expression, to form [expectation object, object context].

Step 5: Express the foregoing generated information in the Jason (for example, triplet) format.

It may be understood that step 1 to step 5 are merely examples for description, and another possible conversion manner is not excluded in this application. For example, a sequence of step 3 and step 4 may not be limited. For another example, step 5 may be performed after step 1 to step 4 are completed, or may be performed after each step is completed. This is not particularly limited in this application.

The foregoing describes a manner in which the first network element converts the first expression into the second expression based on the prompt information. A technical solution in which the first network element alternatively performs conversion in another manner is not excluded in this application. For example, the first network element may process the first expression by using various types of tools such as a large language model (large language model, LLM).

The LLM may project, into mathematical space, discrete data obtained through digitalization of the real world, and become a vector in a mathematical sense. A distance between vectors represents a semantic similarity, so that a technical problem can be resolved based on the mathematical vector. For example, the LLM may include any one or more of the following functions: a natural language processing (natural language processing, NLP) function, a computer vision (computer vision, CV) processing function, a language recognition and synthesis function, and a recommendation system function. The NLP function may be used to process and generate a natural language, for example, tasks such as text classification, machine translation, emotion analysis, and natural language generation. The CV processing function may be used for image classification, target detection, image generation, and the like, and can be used to process visual information. The language recognition and synthesis function may be used for speech recognition, speech synthesis, and the like. A function of the LLM may be set based on an application scenario of the method provided in this embodiment of this application. This is not particularly limited in this application.

In some implementations, the first network element and the second network element may further determine, through interaction, whether the second expression obtained through the conversion expresses the expectation for the network. In other words, the first network element and the second network element may further perform the following steps S330 and S340.

Optionally, in S330, the first network element sends a part or all of the second expression to the second network element. Correspondingly, the second network element receives the part or all of the second expression from the first network element.

For example, the first network element may send, to the second network element, the second expression generated in step S320. For example, after generating all of the second expression, the first network element may send all of the second expression to the second network element. For another example, each time the first network element generates one piece of information (for example, the intent expectation, the intent context, or the intent target), the first network element may send the information to the second network element. For another example, the first network element may send a part of generated information, for example, the intent target, to the second network element. This is not particularly limited in this application.

For example, the first network element may send the following information in the second expression to the second network element: the intent expectation and the expectation context; the intent target and the target context; and/or the expectation object and the object context. In other words, the first network element may send, to the second network element, non-context type information and the context type information (for example, [intent expectation, expectation context], [intent target, target context], and [expectation object, object context]) that are associated. In this case, the second network element may determine, based on all or the part of the received second expression, whether to express the expectation for the network.

It may be understood that a structure of the non-context type information is similar to that of the context type information. For example, the intent target #1 is represented as [energy efficiency, greater than, 80%], and the target context #1 corresponding to the intent target #1 is represented as [load, less than, 20%]. When the first network element converts the first expression into the second expression, there is a risk that the non-context type information (for example, the intent target #1) and the context type information (for example, the target context #1) are reversed, to be specific, [load, less than, 20%] is mistaken for the intent target #1, and [energy efficiency, greater than, 80%] is mistaken for the target context #1. In this embodiment of this application, the first network element sends the part or all of the generated second expression to the second network element, so that the second network element determines whether the second expression is expressed correctly. In this way, reliability of intent expression conversion can be improved.

Optionally, in S340, the second network element sends response information to the first network element. Correspondingly, the first network element receives the response information from the second network element.

The response information is used to determine whether the second expression expresses the expectation for the network. For example, the second network element may determine whether the part or all of the second expression is correct, for example, whether a target name of the intent target is incorrect, whether a target value is incorrect, or whether an error that the intent target and the target context are reversed in settings occurs. For another example, the second network element may determine whether the part or all of the second expression is feasible (or whether the second expression is in a tolerable range). For example, the second network element may determine whether a value range of the target value is tolerable, for example, determine whether a context value range of the object context may fulfill the expectation for the network. For another example, the second network element may authorize or authenticate the part or all of the received second expression. For example, the second network element may determine whether to authorize or authenticate the first network element to express the intent by using the second expression. This is not particularly limited in this application.

If the second network element determines that the part or all of the received second expression expresses the expectation for the network, and the response information indicates that the part or all of the second expression expresses the expectation for the network, the first network element may perform a subsequent step based on the response information (refer to S370).

If the second network element determines that the part or all of the received second expression does not express the expectation for the network, the response information indicates that the part or all of the second expression does not express the expectation for the network. In this case, the first network element may restart execution from step S320 based on the response information, until the expression of the second type that can express the expectation for the network is generated.

In some implementations, if the second network element determines that the part or all of the received second expression does not express the expectation for the network, the response information may indicate how to modify the second expression.

For example, the response information may indicate a reason why the part or all of the second expression does not express the expectation. For example, the response information may indicate which piece of information or which pieces of information in the second expression is or are incorrect. In this case, the second network element may correspondingly modify the information in the second expression. The response information may also indicate a modification manner. For example, the response information indicates to swap the intent target and the target context in the second expression. This is not particularly limited in this application.

For another example, the response information may further indicate a third expression of the first type corresponding to the intent. The third expression is different from the first expression. In other words, the second network element may modify an unstructured intent expression, for example, re-describe the expectation for the network still in an expression manner of the natural language. The first network element may restart execution from step S320 based on the third expression, and convert the third expression into a fourth expression of the second type corresponding to the intent, until the expression of the second type that can express the expectation for the network is obtained.

In some implementations, if the response information indicates that the part or all of the second expression does not express the expectation for the network, after the first network element performs re-conversion based on the response information, to obtain the expression of the second type that can express the expectation for the network, the first network element may further update the prompt information. In other words, the first network element may further perform the following step S350.

Optionally, in S350, the first network element updates the prompt information of the attribute set based on the response information.

The first network element may perform update based on content indicated by the response information. For example, the first network element may perform update based on the reason why the part or all of the second expression does not express the expectation and that is indicated by the response information. For example, if the response information indicates that the target name that of the intent target in the second expression is incorrect, the first network element may update the target name to the prompt information after obtaining a correct target name of the intent target through modification. For another example, if the response information indicates that the intent target and the target context in the second expression are reversed, the first network element may modify a conversion rule for converting the first expression into the intent target and the target context. This is not particularly limited in this application.

The foregoing describes the prompt information used when the first network element converts the first expression into the second expression. The prompt information may be preconfigured, or the prompt information may be obtained by the first network element. In other words, before step S320, the first network element may further perform the following step S360.

Optionally, in S360, the first network element obtains the prompt information.

In some implementations, the first network element may generate the prompt information. For example, the first network element may generate the prompt information based on historical conversion experience.

In some other implementations, the first network element may receive prompt information from another network element. The another network element may be the second network element (for example, a network consumer network element), or may be any network element that can provide the information, like a network element that is responsible for managing data and that is in the network. For example, the first network element may receive the prompt information from the another network element, and the first network element stores or configures the prompt information, so that the prompt information can be used in subsequent conversion. Optionally, after receiving the prompt information from the another network element, the first network element may further send, to the another network element, information in response to the prompt information. The information may indicate whether the first network element successfully receives the prompt information. This is not particularly limited in this application.

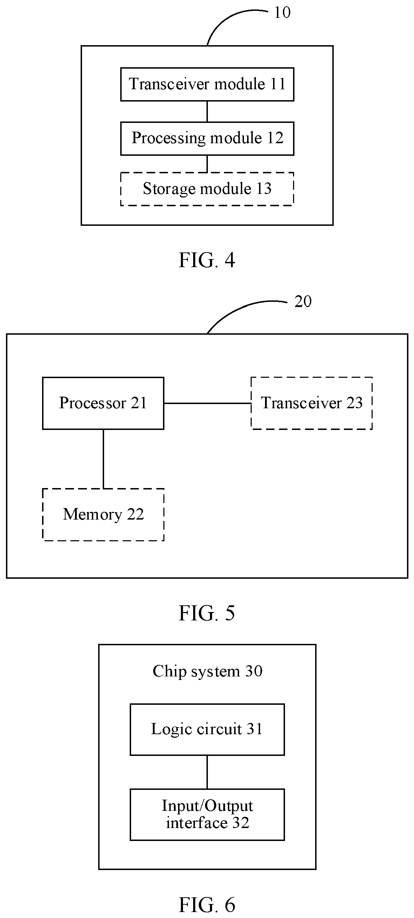

The foregoing describes how the first network element performs conversion to obtain the expression of the second type that can express the expectation for the network. The following describes, with reference to FIG. 4, how the second network element fulfills the expectation for the network. It may be understood that, for ease of description, the following uses the second expression obtained in step 320 for description. If the second expression fails to express the expectation correctly, a manner in which the first network element subsequently modifies or regenerates the expression of the second type is similar to a manner of fulfilling the expectation for the network. Details are not described herein again.

The first network element may fulfill the expectation for the network in the following three manners.

Manner 1: S370 includes steps S371A to S373A.

Optionally, in S371A, the first network element determines the at least one action based on the attribute set.

The first network element may determine the at least one action based on the expectation expressed for the network by using the attribute set. For example, if an expectation target in the second expression is that more than 80% of energy is saved, the first network element may determine an energy-saving action. For example, the base station turns on an energy-saving switch, or the base station enables a sleep mode. This is not particularly limited in this application.

Optionally, in S372A, the first network element sends, to a third network element, information indicating the at least one action.

The first network element may determine the third network element based on the at least one determined action. For example, the third network element may be an indicated application object in the expectation object. For example, if the application object is the base station in the first area, the third network element may be the base station in the first area, and the first network element may send, to the base station in the first area, the information indicating the at least one action. This is not particularly limited in this application.

Optionally, in S373A, the third network element executes the at least one action, to fulfill the expectation.

The third network element may execute the at least one action based on an indication of the first network element, for example, turn on the energy-saving switch, to fulfill an energy-saving expectation. This is not particularly limited in this application.

Manner 2: S370 includes step S371B.

Optionally, in S371B, the first network element determines the at least one action based on the attribute set, and executes the at least one action.

In other words, in Manner 2, after determining the at least one action, the first network element may execute the at least one action. For how to determine the action and execute the action, refer to the descriptions of Manner 1. Details are not described herein again.

Manner 3: S370 includes steps S371C to S373C.

Optionally, in S371C, the first network element sends the second expression to a fourth network element.

The first network element may send the generated second expression of the second type to the fourth network element, and the fourth network element determines the at least one action used to fulfill the expectation. In Manner 3, the first network element may be a network element that provides an expression conversion function, and the fourth network element may be a network element responsible for executing the intent, for example, the network producer entity in FIG. 2.

Optionally, in S372C, the fourth network element determines the at least one action based on the attribute set.

For descriptions of this step, refer to the descriptions of Manner 1. Details are not described herein again.

Optionally, in S373C, the fourth network element sends the information indicating the at least one action, or executes the at least one action.

For descriptions of this step, refer to the descriptions of Manner 1 and Manner 2. Details are not described herein again.

Based on this technical solution, the first network element receives the intent expressed by using the first expression of the first type, and may convert the expression of the first type into the second expression of the second type that can be used to determine the at least one action. The expectation for the network is fulfilled by executing the at least one action. This lowers an intent expression requirement and supports a flexible intent expression.

It should be understood that, in embodiments of this application, unless otherwise stated or there is a logical conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, a method and an operation implemented by a device (for example, the first network element or the second network element) may alternatively be implemented by a component (for example, a chip or a circuit) that can be used in the device.

It may be further understood that some optional features in embodiments of this application may be independent of other features in some scenarios, or may be combined with other features in some scenarios. This is not limited.

The foregoing describes in detail, with reference to FIG. 3, the communication method provided in embodiments of this application. The communication method is mainly described from a perspective of the first network element or the second network element. It may be understood that, to implement the foregoing functions, the first network element or the second network element includes a corresponding hardware structure and/or software module for performing the functions.

A person skilled in the art should be able to be aware that in combination with units and algorithm steps of the examples described in embodiments disclosed in this specification, this application can be implemented in a form of hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

The following describes in detail, with reference to FIG. 4 to FIG. 6, communication apparatuses provided in embodiments of this application. It should be understood that descriptions of apparatus embodiments correspond to the descriptions of the method embodiments. Therefore, for content that is not described in detail, refer to the foregoing method embodiments. For brevity, details of a part of content are not described herein again.

In embodiments of this application, functional modules of a transmit end device or a receive end device may be divided based on the foregoing method examples. For example, functional modules may be divided based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. In an actual implementation, another division manner may be used. The following uses an example in which each functional module is obtained through division based on each corresponding function for description.

FIG. 4 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing. Alternatively, the transceiver module 11 is configured to perform receiving and sending-related operations, and the processing module 12 is configured to perform an operation other than receiving and sending operations. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement actions of the device in the foregoing method embodiments.

In a first design, the apparatus 10 may correspond to the first network element in the foregoing method embodiments, or may be a component (for example, a chip) of the first network element.

The apparatus 10 may implement corresponding steps or procedures performed by the first network element in the foregoing method embodiments. The transceiver module 11 may be configured to perform receiving and sending-related operations of the first network element in the foregoing method embodiments, and the processing module 12 may be configured to perform processing-related operations of the first network element in the foregoing method embodiments.

It should be understood that specific processes in which units perform the foregoing corresponding steps are described in detail in the foregoing method embodiments. For brevity, details are not described herein again.

In a second design, the apparatus 10 may correspond to the second network element in the foregoing method embodiments, or may be a component (for example, a chip) of the second network element.

The apparatus 10 may implement corresponding steps or procedures performed by the second network element in the foregoing method embodiments. The transceiver module 11 may be configured to perform receiving and sending-related operations of the second network element in the foregoing method embodiments, and the processing module 12 may be configured to perform processing-related operations of the second network element in the foregoing method embodiments.

It should be understood that specific processes in which units perform the foregoing corresponding steps are described in detail in the foregoing method embodiments. For brevity, details are not described herein again.

It should be further understood that the apparatus 10 herein is embodied in a form of a functional module. The term "module" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another suitable component that supports the described functions. In an optional example, a person skilled in the art may understand that the apparatus 10 may be specifically the first network element in the foregoing embodiments, and may be configured to perform procedures and/or steps corresponding to the first network element in the foregoing method embodiments. Alternatively, the apparatus 10 may be specifically the second network element in the foregoing embodiments, and may be configured to perform procedures and/or steps corresponding to the second network element in the foregoing method embodiments. To avoid repetition, details are not described herein again.

The apparatus 10 in the foregoing solutions has a function of implementing corresponding steps performed by the device (for example, the first network element or the second network element) in the foregoing methods. The function may be implemented by hardware, or may be implemented by hardware executing corresponding software. The hardware or the software includes one or more modules corresponding to the function. For example, the transceiver module may be replaced with a transceiver machine (for example, a sending unit in the transceiver module may be replaced with a transmitter machine, and a receiving unit in the transceiver module may be replaced with a receiver machine), and another unit like the processing module may be replaced with a processor, to respectively perform receiving and sending operations and related processing operations in the method embodiments.

In addition, the transceiver module 11 may alternatively be a transceiver circuit (for example, may include a receiving circuit and a sending circuit), and the processing module may be a processing circuit.

FIG. 5 is a diagram of another communication apparatus 20 according to an embodiment of this application. The apparatus 20 includes a processor 21. The processor 21 is configured to: execute a computer program or instructions stored in a memory 22, or read data/signaling stored in the memory 22, to perform the method in the foregoing method embodiments. Optionally, there are one or more processors 21.

Optionally, as shown in FIG. 5, the apparatus 20 further includes the memory 22. The memory 22 is configured to store the computer program or the instructions and/or the data. The memory 22 and the processor 21 may be integrated together, or may be disposed separately. Optionally, there are one or more memories 22.

Optionally, as shown in FIG. 5, the apparatus 20 further includes a transceiver 23. The transceiver 23 is configured to receive and/or send a signal. For example, the processor 21 is configured to control the transceiver 23 to receive and/or send the signal.

In a solution, the apparatus 20 is configured to implement operations performed by the first network element or the second network element in the foregoing method embodiments.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes a plurality of the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is the general-purpose processor, the DSP, the ASIC, the FPGA or the another programmable logic device, the discrete gate or the transistor logic device, or the discrete hardware component, the memory (a storage module) may be integrated into the processor.

It should be further noted that the memory described in this specification is intended to include but is not limited to these memories and any memory of another suitable type.

FIG. 6 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in a storage unit, to cause the chip system 30 to implement the method and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the first network element or the second network element in the foregoing method embodiments.

For example, the logic circuit 31 is configured to implement processing-related operations performed by the first network element or the second network element in the foregoing method embodiments; and the input/output interface 32 is configured to implement sending and/or receiving-related operations performed by the first network element or the second network element in the foregoing method embodiments.

An embodiment of this application further provides a computer-readable storage medium. The computer-readable storage medium stores computer instructions for implementing the method performed by the device in the foregoing method embodiments.

For example, when a computer program is executed by a computer, the computer is caused to implement the method performed by the first network element or the second network element in the foregoing method embodiments.

An embodiment of this application further provides a computer program product, including instructions. When the instructions are executed by a computer, the method performed by the first network element or the second network element in the foregoing method embodiments is implemented.

An embodiment of this application further provides a communication system, including the foregoing first network element or second network element.

For explanations and beneficial effects of related content in any one of the apparatuses provided above, refer to the corresponding method embodiment provided above. Details are not described herein again.

In the several embodiments provided in this application, it should be understood that the disclosed apparatuses and method may be implemented in other manners. For example, the apparatus embodiments described above are merely examples. For example, division into the units is merely logical function division and may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

All or a part of the foregoing embodiments may be implemented by software, hardware, firmware, or any combination thereof. When the software is used to implement the foregoing embodiments, all or a part of the foregoing embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, including one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A network management method, wherein the method is applied to a first network element and comprises:
receiving an intent, wherein the intent expresses an expectation for a network by using a first expression of a first type; and
converting the first expression into a second expression of a second type corresponding to the intent, wherein the second expression comprises an attribute set, the attribute set is used to determine at least one action, and the at least one action is used to fulfill the expectation.

2. The method according to claim 1, wherein the first expression is different from the second expression.

3. The method according to claim 1 or 2, wherein the first expression comprises information that is not expressed by using the attribute set.

4. The method according to any one of claims 1 to 3, wherein the first expression comprises information expressed by using an unstructured language, and the second expression comprises information expressed by using a structured language.

5. The method according to any one of claims 1 to 4, wherein the intent is from a second network element, and the method further comprises:
sending a part or all of the second expression to the second network element; and
receiving response information from the second network element, wherein the response information is used to determine whether the second expression expresses the expectation.

6. The method according to claim 5, wherein the second expression does not express the expectation, and the response information indicates how to modify the second expression.

7. The method according to claim 6, wherein the response information comprises a third expression of the first type used to express the expectation, and the third expression is different from the first expression.

8. The method according to any one of claims 5 to 7, wherein the sending the part or all of the second expression to the second network element comprises:
sending the following information in the second expression to the second network element: an intent expectation and an expectation context; an intent target and a target context; and/or an expectation object and an object context.

9. The method according to any one of claims 1 to 8, wherein the converting the first expression into the second expression of the second type corresponding to the intent comprises:
converting, based on prompt information of the attribute set, the first expression into the expression of the second type corresponding to the intent, wherein the prompt information indicates a conversion rule between the first expression and the second expression.

10. The method according to claim 9, wherein
the second expression comprises an intent expectation, and the conversion rule comprises a rule for converting the first expression into the intent expectation;
the second expression comprises an expectation context, and the conversion rule comprises a rule for converting the first expression into the expectation context;
the second expression comprises an intent target, and the conversion rule comprises a rule for converting the first expression into the intent target;
the second expression comprises a target context, and the conversion rule comprises a rule for converting the first expression into the target context;
the second expression comprises an expectation object, and the conversion rule comprises a rule for converting the first expression into the expectation object; and/or
the second expression comprises an object context, and the conversion rule comprises a rule for converting the first expression into the object context.

11. The method according to any one of claims 6 to 10, wherein the method further comprises:
updating the prompt information of the attribute set based on the response information.

12. The method according to any one of claims 1 to 11, wherein the method further comprises:
obtaining the prompt information.

13. The method according to any one of claims 1 to 12, wherein the method further comprises:
determining the at least one action based on the attribute set; and
sending, to a third network element, information indicating the at least one action, or executing the at least one action.

14. The method according to any one of claims 1 to 12, wherein the method further comprises:
sending the second expression to a fourth network element, wherein the fourth network element is configured to determine the at least one action.

15. A communication apparatus, comprising a unit or a module configured to perform the method according to any one of claims 1 to 14.

16. A communication system, comprising an apparatus configured to perform the method according to any one of claims 1 to 14.

17. A computer-readable storage medium, wherein the computer-readable storage medium stores a computer program, and when the computer program is run on a computer, the computer is caused to perform the method according to any one of claims 1 to 14.

18. A computer program product, comprising computer program code, wherein when the computer program code is run on a computer, the computer is caused to implement the method according to any one of claims 1 to 14.

19. A communication apparatus, comprising: a processor, configured to execute a computer program stored in a memory, to cause the apparatus to perform the method according to any one of claims 1 to 14.

20. The apparatus according to claim 19, wherein the apparatus further comprises the memory.
